# EUROPÄISCHE PATENTSCHRIFT

(11) **EP 0 425 862 B1**
(45) Veröffentlichungstag und Bekanntmachung des Hinweises auf die Patenterteilung: **31.03.1993**
(21) Anmeldenummer: 90119562.8
(22) Anmeldetag: 12.10.1990
(51) Int. Cl.: B60K 15/035

(54) **Vorrichtung zum Entsorgen von Kraftstoffdämpfen in Kraftfahrzeugen**
Apparatus for the disposal of fuel gases from vehicle fuel tanks
Dispositif d'évacuation de gaz combustible d'un réservoir de carburant d'un véhicule

(30) Priorität: 28.10.1989 DE 3936057
(43) Veröffentlichungstag der Anmeldung: 08.05.1991
(73) Patentinhaber: AUDI AG, 85045 Ingolstadt (DE)
(72) Erfinder: Siebler, Johann, W-8069 Fahlenbach (DE)

(56) Entgegenhaltungen:
- DE-C- 3 734 414
- DE-U- 8 715 030
- FR-A- 2 625 284
- US-A- 3 491 788
- REVUE TECHNIQUE AUTOMOBILE. vol. 451, no. 1, Januar 1985, BOULOGNE-BILLANCOURT Seite 112 "Carburateur Weber =32 TLF= sur le nouveau moteur FIAT =FIRE 1000="

## Beschreibung

Die Erfindung betrifft eine Vorrichtung zum Entsorgen von Kraftstoffdämpfen in Kraftfahrzeugen, gem. dem Oberbegriff des Patentanspruches 1.

Eine derartige Vorrichtung zeigt die DE-37 34 414 C1, bei der die zweite geodätisch höherliegende Belüftungsleitung für den Aktivkohle-Behälter von der ersten tieferliegenden Belüftungsleitung abzweigt und in dieser Belüftungsleitung ein Unterdruck-Begrenzungsventil angeordnet ist, welches bei regulärem Fahrbetrieb die zweite Belüftungsleitung geschlossen hält. Ist die tieferliegende erste Belüftungsleitung beispielsweise durch Vereisung, Verschmutzung oder ggf. durch hohen Wasserstand auf der Fahrbahn verschlossen, so wird durch den auftretenden Unterdruck das Begrenzungsventil geöffnet und die Belüftung des Behälters über die zweite geodätisch höherliegende Belüftungsleitung sichergestellt.

Bei dieser Vorrichtung bleibt aber unabhängig vom Betriebszustand des Unterdruck-Begrenzungsventiles die erste Belüftungsleitung zum Behälter offen; es ist deshalb nicht auszuschließen, daß bei ungünstigen Betriebsbedingungen (z.B. Schrägstellung des Kraftfahrzeuges) Wasser in den Aktivkohle-Behälter eindringen kann. Ferner bedingt die bekannte Vorrichtung eine relativ hochliegende Anordnung des Behälters im Krafftfahrzeug, um eine ausreichende Druckdifferenz in der ersten Leitung zum Ansprechen des Unterdruck-Begrenzungsventiles sicherstellen zu können.

Aufgabe der Erfindung ist es, eine unabhängig von der Druckdifferenz bzw. der Anordnung des Behälters zuverlässig funktionierende, baulich einfache Vorrichtung der gattungsgemäßen Art zu schaffen.

Diese Aufgabe wird erfindungsgemäß mit den kennzeichnenden Merkmalen des Patentanspruches 1 gelöst. Vorteilhafte und zweckmäßige Weiterbildungen der Erfindung sind den weiteren Patentansprüchen entnehmbar.

Erfindungsgemäß steuert das in die erste Leitung eingeschaltete Schwimmerventil die beiden Belüftungsleitungen derart, daß bei geschlossener erster Leitung die zweite geöffnet ist und umgekehrt. So schließt bei einer Wasserdurchfahrt des Kraftfahrzeuges das Schwimmerventil die erste Leitung zuverlässig ab und stellt zugleich über die geöffnete zweite Leitung die Belüftung bzw. Regenerierung des Aktivkohle-Behälters sicher. Mit dem Öffnen der ersten Leitung wird wiederum die zweite Leitung geschlossen (regulärer Fahrbetrieb).

Das Schwimmerventil kann entweder in den Aktivkohle-Behälter integriert sein, an diesen angebaut sein, oder gem. Anspruch 2 in die erste Leitung integriert und zweckmäßigerweise aus Kunststoff hergestellt sein.

Ferner kann das Schwimmerventil baulich und herstellungstechnisch besonders günstig entsprechend den Merkmalen der Patentansprüche 3 und 4 oder alternativ der Patentansprüche 5 und 6 ausgebildet sein.

Zwei Ausführungsbeispiele der Erfindung sind im folgenden mit weiteren Einzelheiten näher erläutert. Die schematische Zeichnung zeigt in
- **Fig.1**: Eine Vorrichtung in einem Kraftfahrzeug zum Entsorgen der aus einem Kraftstoffbehälter ausgasenden Kraftstoffdämpfe mit einem Schwimmerventil;
- **Fig.2**: im Längsschnitt ein Schwimmerventil mit einem L-förmigen Schwimmerelement und
- **Fig.3**: einen weiteren Längsschnitt durch ein Schwimmerventil mit einem aus zwei Ventilkugeln gebildeten Schwimmerelement.

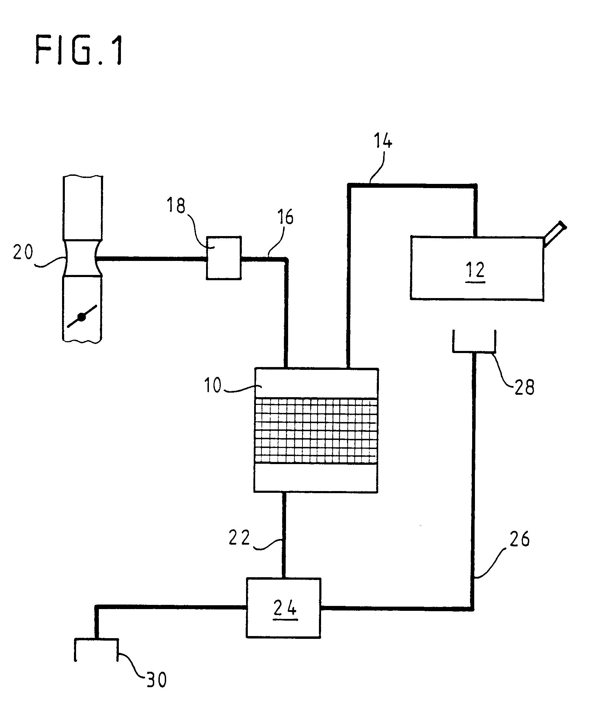

In der Fig. 1 ist mit 10 ein Behälter zum Adsorbieren von aus einem Kraftstofftank 12 ausgasenden Kraftstoffdämpfen bezeichnet, der beispielsweise mit Aktivkohle gefüllt sein kann. Die Kraftstoffdämpfe werden dabei vom Kraftstoffbehälter 12 über eine Leitung 14 zum Behälter 10 geleitet.

Weiter ist eine Absaugleitung 16 vorgesehen, die vom Behälter 10 über ein Taktventil 18 zu einem Venturiabschnitt 20 des nicht dargestellten Saugrohres der Brennkraftmaschine führt.

Ferner ist eine Verbindung vom Behälter 10 zur Atmosphäre vorgesehen, die über eine erste Leitung 22 gebildet ist, in die ein Schwimmerventil 24 integriert ist. Von dem Schwimmerventil 24 zweigt eine zweite Leitung 26 ab, die an einer geodätisch höherliegenden Stelle des Kraftfahrzeuges bei 28 zur Atmosphäre offen ist. Die erste Leitung 22 mündet im Bodenbereich des Kraftfahrzeuges bei 30 zur Atmosphäre.

Die aus dem Kraftstoffbehälter 12 ausgasenden Kraftstoffdämpfe bzw. Kohlewasserstoffe werden im Aktivkohlebehälter 10 adsorbiert, so daß im Regelfall über die zur Atmosphäre offene Leitung 22 keine Kraftstoffdämpfe austreten. Im Fahrbetrieb des Kraftfahrzeuges bei laufender Brennkraftmaschine werden bei definierten Betriebszuständen gesteuert über das Taktventil 18 die in dem Behälter 10 adsorbierten Kohlewasserstoffe in den Venturiabschnitt 20 abgesaugt und in der Brennkraftmaschine verbrannt. Dabei wird über die erste Leitung 22 und über das offene Schwimmerventil 24 Regenerierungsluft zugeführt.

Sollte beispielsweise bei einer Wasserdurchfahrt des Kraftfahrzeuges über die Mündung bei 30 in die Leitung 22 Wasser eindringen, so schließt das Schwimmerventil 24 und öffnet dabei gleichzeitig die zweite Leitung 26, die über die Mündung bei 28 zur Atmosphäre offen ist und nunmehr die Belüftung bzw. Regenerierung des Behälters 10 sicherstellt.

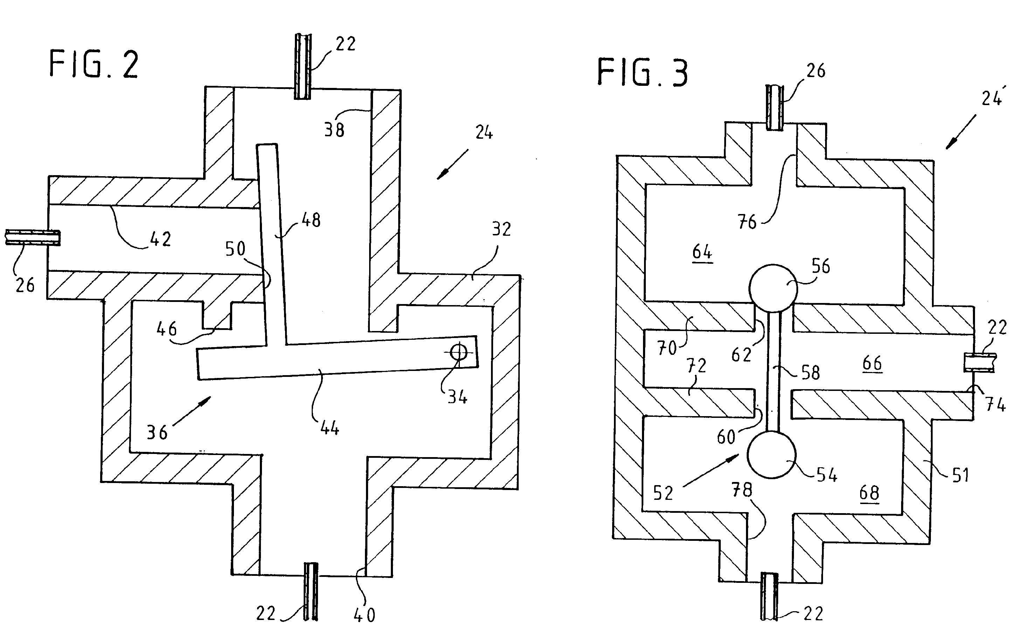

Wie der Fig. 2 entnehmbar ist, besteht das Schwimmerventil 24 aus einem aus Kunststoff hergestellten Gehäuse 32, indem über eine Achse 34 ein schwenkbar gelagertes Schwimmerelement 36 aufgenommen ist. Das Gehäuse 32 weist einen ersten Anschluß 38 für den Leitungsabschnitt 22 zum Behälter 10 und einen zweiten Anschluß 40 für den Leitungsabschnitt 22 zur Atmosphäre auf, während ein dritter Anschluß 42 für die zweite Leitung 26 zur Atmosphäre vorgesehen ist.

Das Schwimmerelement 36 ist im Querschnitt L-förmig gestaltet, wobei der als Schwimmer wirkende Schenkel 44 einen Durchlaß 46 zwischen den Anschlüssen 38,40 steuert, während der im wesentlichen rechtwinkelig abragende Schenkel 48 den Durchlaß 50 zwischen dem Anschluß 42 und dem Anschluß 38 öffnet oder schließt.

In der einen Endstellung (wie gezeichnet) ist die Leitung 22 durchgesteuert, so daß die normale Belüftung bzw. Regenerierung des Behälters 10 über die erste Leitung 22 erfolgt. Wird beispielsweise bei einem Eindringen von Wasser über den Anschluß 40 das Schwimmerelement 36 beaufschlagt und dabei im Uhrzeigersinn verschwenkt, so schließt der Schenkel 44 den Durchlaß 46, während der Schenkel 48 gleichzeitig den Durchlaß 50 aufsteuert. Dadurch ist nunmehr eine Belüftung bzw. Regenerierung des Behälters 10 über die zweite Leitung 26 sichergestellt, die nunmehr zu dem den Behälter 10 benachbarten Leitungsabschnitt 22 durchgesteuert ist. Andererseits ist das Eindringen von Wasser über die Leitung 22 ausgeschlossen.

Die Fig. 3 zeigt eine alternative Bauform des Schwimmerventiles 24′, bei dem das in einem Gehäuse 51 beweglich gelagerte Schwimmerelement 52 durch zwei Ventilkugeln 54,56 gebildet ist, die durch einen Stift 58 miteinander verbunden sind. Das Gehäuse 51 und das Schwimmerelement 52 sind wiederum aus Kunststoff hergestellt. Anstelle von Kugeln 54,56 können auch andere Ventilkörper, zum Beispiel Kegel, verwendet sein.

Das Schwimmerelement 52 steuert zwei Durchlässe 60,62 zwischen drei in dem Gehäuse 51 gebildeten Kammern 64,66,68. Die Durchlässe 60,62 sind - sich gegenüberliegend - in den Trennwänden 70,72 des Gehäuses 51 angeordnet.

Eine jede Kammer 64,66,68 ist mit einem Anschluß versehen, wobei der Anschluß 74 der mittleren Kammer 66 für den Leitungsabschnitt 22 zwischen dem Behälter 10 und dem Schwimmerventil 24′ ausgebildet ist, der Anschluß 76 mit der zweiten Leitung 26 korrespondiert und schließlich der Anschluß 78 mit dem zur Atmosphäre offenen Leitungsabschnitt 22 verbunden ist.

In der gezeichneten Stellung ist das Schwimmerventil 24′ wiederum in der Normalstellung, d. h., daß die Leitung 22 bei offenem Durchlaß 60 durchgesteuert ist. Beispielsweise bei einem Eindringen von Wasser über die Leitung 22 und den Anschluß 78 in die Kammer 68 schwimmt die als Schwimmer ausgebildete Ventilkugel 54 auf und verschließt dabei den Durchlaß 60, während über den Stift 58 und die Ventilkugel 56 zugleich der Durchlaß 62 aufgesteuert wird. Dadurch ist nunmehr die zweite Leitung 26 mit dem zum Behälter 10 führenden Leitungsabschnitt 22 verbunden, wodurch wiederum die Belüftung des Behälters 10 über die zweite Leitung 26 sichergestellt ist.

## Patentansprüche

1. Vorrichtung zum Entsorgen von Kraftstoffdämpfen in Kraftfahrzeugen, mit einem mit dem Kraftstoffbehälter verbundenen Kraftstoffdämpfe adsorbierenden Behälter, der zudem mit einer Absaugleitung zur Brennkraftmaschine und einer zur Atmosphäre offenen Verbindung versehen ist, wobei die Verbindung eine erste tieferliegende Leitung und eine zweite geodätisch höherliegende Leitung aufweist und ein Ventil vorgesehen ist, welches bei einem übermäßigen Unterdruck in der ersten Leitung die zweite Leitung öffnet, **dadurch gekennzeichnet,** daß
- das Ventil ein Schwimmerventil (24) ist, welches bei offener erster Leitung (22) die zweite Leitung (26) geschlossen und bei offener zweiter Leitung (26) die erste Leitung (22) geschlossen hält, und
- das Schwimmerventil (24) in die erste Leitung (22) eingeschaltet ist.

2. Vorrichtung nach Anspruch 1, **dadurch gekennzeichnet,** daß das Schwimmerventil (24) in die erste Leitung (22) integriert ist.

3. Vorrichtung nach den Ansprüchen 1 und 2, **dadurch gekennzeichnet,** daß das Schwimmerventil (24) aus einem Gehäuse (32) mit einem Anschluß (38) zum Behälter (10) und je einem Anschluß (40,42) zur ersten und zur zweiten Leitung (22,26) besteht und daß im Gehäuse (32) ein bewegliches Schwimmerelement (36) gelagert ist, welches in der einen Endstellung den Anschluß (38) zum Behälter (10) mit dem Anschluß (40) zur ersten Leitung (22) und in der anderen Endstellung mit dem Anschluß (42) zur zweiten Leitung (26) verbindet.

4. Vorrichtung nach Anspruch 3, **dadurch gekennzeichnet,** daß das Schwimmerelement (36) im Querschnitt L-förmig ausgebildet ist, wobei ein jeder Schenkel (44,48) einen Durchlaß (46,50) im Gehäuse (32) steuert.

5. Vorrichtung nach den Ansprüchen 1 und 2, **dadurch gekennzeichnet,** daß das Schwimmerventil (24_) aus einem Gehäuse (51) mit je einem Anschluß (74,76,78) zum Behälter (10), zur ersten Leitung (22) und zur zweiten Leitung (26) besteht, daß ein jeder Anschluß in eine Kammer (64,66,68) im Gehäuse (51) mündet und daß Durchlässe (60,62) in den Kammern von den beweglichen Schwimmerelementen (52) gesteuert sind.

6. Vorrichtung nach Anspruch 5, **dadurch gekennzeichnet,** daß das Schwimmerelement (52) durch zwei über einen Stift (58) miteinander gekoppelte Ventilkörper (54,56) gebildet ist, die wechselweise den einen oder den anderen Durchlaß (60,62) von der ersten oder der zweiten Leitung (22 bzw. 26) zur mit dem Behälter (10) verbundenen Kammer (66) öffnen bzw. schließen.

## Claims

1. Device for the disposal of fuel vapours in motor vehicles, comprising a tank which adsorbs fuel vapours and is connected to the fuel tank, and which in addition is equipped with a suction line to the combustion engine and a connection open to the atmosphere, said connection having a first line situated lower down and a second line situated geodetically higher, and a valve being provided which opens the second line if there is an excessive vacuum in the first line,
characterised in that
- the valve is a float valve (24) which keeps the second line (26) closed when the first line (22) is open and the first line (22) closed when the second line (26) is open, and
- the float valve (24) is connected into the first line (22).

2. Device according to claim 1, characterised in that the float valve (24) is integrated into the first line (22).

3. Device according to claims 1 and 2, characterised in that the float valve (24) consists of a casing (32) with a connection (38) to the tank (10) and respective connections (40, 42) to the first and to the second line (22, 26), and that mounted in the casing (32) is a mobile float element (36) which in one limit position joins the connection (38) to the tank (10) with the connection (40) to the first line (22) and in the other limit position with the connection (42) to the second line (26).

4. Device according to claim 3, characterised in that the float element (36) has an L-shaped cross-section, each limb thereof (44, 48) controlling a passage (46, 50) in the casing (32).

5. Device according to claims 1 and 2, characterised in that the float valve (24_) consists of a casing (51) having respective connections (74, 76, 78) to the tank (10), to the first line (22) and to the second line (26), that each connection opens out into a chamber (64, 66, 68) in the casing (61) and that passages (60, 62) in the chambers are controlled by the mobile float elements (52).

6. Device according to claim 5, characterised in that the float element (52) is formed by two valve bodies (54, 56) coupled to one another via a pin (58), said valve bodies alternately opening and closing one or other passage (60, 62) from the first or the second line (22 and 26 respectively) to the chamber (66) connected to the tank (10).

## Revendications

1. Dispositif pour évacuer des vapeurs de carburant dans des véhicules automobiles, comportant un récipient adsorbant les vapeurs de carburant, qui est relié au réservoir de carburant et muni en outre d'une conduite d'évacuation par aspiration vers le moteur à combustion interne et d'une liaison ouverte vers l'atmosphère, cette liaison présentant une première conduite située en position inférieure et une seconde conduite située en position géodésiquement supérieure, et dans lequel il est prévu une soupape, qui ouvre la seconde conduite en cas de dépression excessive dans la première conduite,
**caractérisé** en ce que
- la soupape est une soupape à flotteur (24), qui maintient la seconde conduite (26) fermée lorsque la première conduite (22) est ouverte, et la première conduite (22) fermée lorsque la seconde conduite (26) est ouverte.
- la soupape à flotteur (24) est intercalée dans la première conduite (22).

2. Dispositif selon la revendication 1, **caractérisé** en ce que la soupape à flotteur (24) est incorporée dans la première conduite (22).

3. Dispositif selon la revendication 1 ou 2, **caractérisé** en ce que la soupape à flotteur (24) est constituée d'un boîtier (32) présentant un raccord (38) pour le récipient (10) et un raccord (40, 42) pour chacune des première et seconde conduites (22, 26), et en ce qu'un flotteur mobile (36) est monté dans le boîtier (32) et met en communication le raccord (38) pour le récipient (10) avec le raccord (40) pour la première conduite (22) dans une position finale du flotteur, et avec le raccord (42) pour la seconde conduite (26) dans l'autre position finale du flotteur.

4. Dispositif selon la revendication 3, **caractérisé** en ce que le flotteur (36) est configuré avec une section en L, chaque branche (44, 48) du L commandant un passage respectif (46, 50) dans le boîtier (32).

5. Dispositif selon la revendication 1 ou 2, **caractérisé** en ce que la soupape à flotteur (24) est constituée d'un boîtier (51) présentant un raccord respectif (74, 76, 78) pour le récipient (10), pour la première conduite (22) et pour la seconde conduite (26), en ce que chaque raccord débouche dans une chambre respective (64, 66, 68) du boîtier (51), et en ce que des passages (60, 62) entre les chambres sont commandés par un flotteur mobile (52).

6. Dispositif selon la revendication 5, **caractérisé** en ce que le flotteur (52) est constitué de deux corps de soupape (54, 46), qui sont mutuellement accouplés par une tige (58) et qui ouvrent ou ferment alternativement l'un ou l'autre passage (60, 62), menant de la première ou de la seconde conduite (22 ou 26) vers la chambre (66) reliée au récipient (10).
